Europäisches Patentamt

European Patent Office

Office européen des brevets

(11) Numéro de publication: **0 215 696 B1**

# FASCICULE DE BREVET EUROPEEN

(45) Date de publication de fascicule du brevet:
**29.01.92**

(51) Int. Cl.⁵: **G02B 6/38**

(21) Numéro de dépôt: **86401796.7**

(22) Date de dépôt: **11.08.86**

(54) **Dispositif pour établir, de façon réversible, une connexion entre deux fibres optiques, fiches mobiles et dispositif de fixation pour ce dispositif, et procédé de préparation d'une terminaison de fibre optique adapté.**

(30) Priorité: **13.08.85 FR 8512336**

(43) Date de publication de la demande:
**25.03.87 Bulletin 87/13**

(45) Mention de la délivrance du brevet:
**29.01.92 Bulletin 92/05**

(84) Etats contractants désignés:
**BE CH DE FR GB IT LI NL SE**

(56) Documents cités:
EP-A- 0 085 825    EP-A- 0 090 724
EP-A- 0 103 527    FR-A- 2 476 856
US-A- 3 885 859    US-A- 4 135 783
US-A- 4 148 559    US-A- 4 225 214

PATENT ABSTRACTS OF JAPAN, vol. 8, no.
254 (P-315)[1691], 21 novembre 1984; & JP-
A-59 126 507

(73) Titulaire: **RADIALL INDUSTRIE**
**101, rue Philibert Hoffmann**
**F-93116 Rosny-Sous-Bois(FR)**

Titulaire: **AMPHENOL SOCAPEX Société Ano-**

nyme
**5, Rue du Président Krüger B.P. no. 5**
**F-92403 Courbevoie Cédex(FR)**

Titulaire: **SOURIAU ET CIE**
**145 rue Yves le Coz**
**F-78035 Versailles(FR)**

(72) Inventeur: **Zajac, Elie**
**1, allée des Tulipes**
**Les Floralies F-93220 Gagny(FR)**
Inventeur: **Desmurs, Roland**
**97, rue Sevin Vincent**
**F-92210 Saint-Cloud(FR)**
Inventeur: **Pelletier, Jean-Luc**
**51, rue du Sahel**
**F-75012 Paris(FR)**

(74) Mandataire: **Ahner, Francis et al**
**CABINET REGIMBEAU, 26, avenue Kléber**
**F-75116 Paris(FR)**

## Description

La présente invention concerne un dispositif de connexion réversible entre deux fibres optiques.

Plus précisément, elle concerne les dispositifs de connexion dans lesquels chacune des fibres optiques est fixée dans un dispositif de fixation respectif laissant dépasser une partie terminale de fibre dénudée.

Ces dispositifs comprennent :

. une embase pourvue d'un organe de guidage recevant qui reçoit et aligne le long d'une direction de guidage deux parties terminales de fibre,

. deux fiches mobiles de forme longitudinale, emboîtables chacune dans l'embase de part et d'autre de l'organe de guidage, de sorte que les axes longitudinaux des fiches forment un angle d'inclinaison par rapport à la direction de guidage de l'organe de guidage, chaque fiche comportant un canal central terminé à son extrémité arrière par un réceptable contenant le dispositif de fixation correspondant, muni de sa fibre et à son extrémité avant par un orifice de dimensions légèrement supérieures au diamètre de la partie terminale de fibre, la longueur du canal laissant subsister, au-delà de l'orifice, une partie émergente de la partie terminale de fibre après mise en place du dispositif de fixation de fibre dans le réceptacle, et sa largeur étant suffisante pour autoriser une flexion limitée de la partie terminale de fibre en fonction des sollicitations exercées sur la partie émergente.

Le brevet américain US-A-4 135 783 décrit un dispositif de ce type. Ce dispositif connu présente, par rapport à d'autres dispositifs, connus par exemple des brevets français FR-A-2 367 295 et FR-A-2 476 856, l'avantage que la partie libre de la fibre (c'est-à-dire la partie émergeant du dispositif de fixation de fibre) est maintenue et orientée vers l'organe de guidage au moment de la mise en place de la fibre dans le dispositif de connexion.

Néanmoins, le dispositif selon le brevet américain mentionné ci-dessus présente l'inconvénient de ne pas répondre aux exigences d'immobilisation et de mise en butée des parties terminales de fibre.

Dans le but de remédier à ces limitations d'emploi, le dispositif selon l'invention comprend également un organe presseur, placé en regard de l'organe de guidage, pour immobiliser avec serrage les parties terminales de fibre contre celui-ci, et chaque fiche comporte une surface frontale de mise en butée et d'appui réciproque des deux fiches, de sorte que l'enfoncement des fiches dans l'embase et leur mise en butée permettent la venue en contact des faces d'extrémité des deux fibres dans l'organe de guidage, et la flexion de la fibre dans le canal de la fiche assurant, par réaction, un contact de pression tout en autorisant, le cas échéant, un décalage, par rapport au plan médian du dispositif, du plan de joint défini par les faces en contact des fiches.

De préférence, l'axe du réceptacle est décalé par rapport à l'axe du canal, de manière à prépositionner la partie émergente de la partie terminale de fibre, selon une orientation préférentielle dans un plan contenant les deux axes après insertion du dispositif de fixation de fibre dans la fiche.

De préférence, l'organe de guidage est prolongé, de part et d'autre, par une surface évasée formant organe de préguidage.

De préférence, il est prévu des moyens de verrouillage en position de connexion empêchant le retrait des fiches hors de l'embase ou leur introduction dans celle-ci.

Dans ce cas, avantageusement :

- les moyens de verrouillage et l'organe presseur sont actionnés par un moyen de commande unique,

- il est prévu, outre la position de connexion des fibres, une position de déconnexion temporaire empêchant le retrait des fiches hors de l'embase après un léger retrait de celles-ci en arrière de leur position de connexion.

De préférence également, l'embase comporte deux glissières symétriques recevant et guidant les fiches en direction de l'organe de guidage.

Dans ce cas, avantageusement :

- les glissières sont inclinées, en direction de l'organe de guidage, par rapport au plan d'ensemble de l'embase,

- les glissières sont ouvertes dans leur région arrière, de manière à permettre l'introduction de la fiche dans la glissière par insertion dans l'ouverture.

En ce qui concerne l'organe presseur, celui-ci comporte de préférence :

- un élément déplaçable en translation au moyen d'un excentrique,

- un élément élastique déformable, en regard de l'organe de guidage,

- des surfaces de butée venant en contact avec l'embase de manière à limiter la course de l'organe presseur et la déformation de l'élément élastique à une valeur assurant une immobilisation des fibres sans contrainte excessive sur ces dernières.

L'invention a également pour objet une fiche spécialement conçu pour le dispositif de connexion qui vient d'être exposé.

D'autres caractéristiques et avantages de l'invention apparaîtront à la lecture de la description détaillée ci-dessous d'un mode de réalisation, faite en référence aux dessins annexés, sur lesquels :

- la figure 1 est une vue en plan de l'embase du dispositif selon l'invention,
- la figure 2 est une vue en élévation, partiellement en coupe, du dispositif entièrement équipé, en position de connexion,
- la figure 3 est une demi-vue correspondant à la figure 2, la fiche mobile étant représentée avant son insertion dans l'embase,
- la figure 4 est une vue en coupe, selon la ligne IV-IV de la figure 3, montrant la structure du système presseur,
- la figure 5 est une vue perspective du dispositif de fixation de fibre ouvert, avant mise en place de la terminaison de fibre,
- la figure 6 est une demi-coupe, homologue de celle de la figure 3, montrant la structure interne de la fiche, le dispositif étant en position de déconnexion temporaire,
- la figure 7 montre schématiquement les différentes courbures que peut prendre la terminaison de fibre en fonction des sollicitations qui lui sont appliquées.

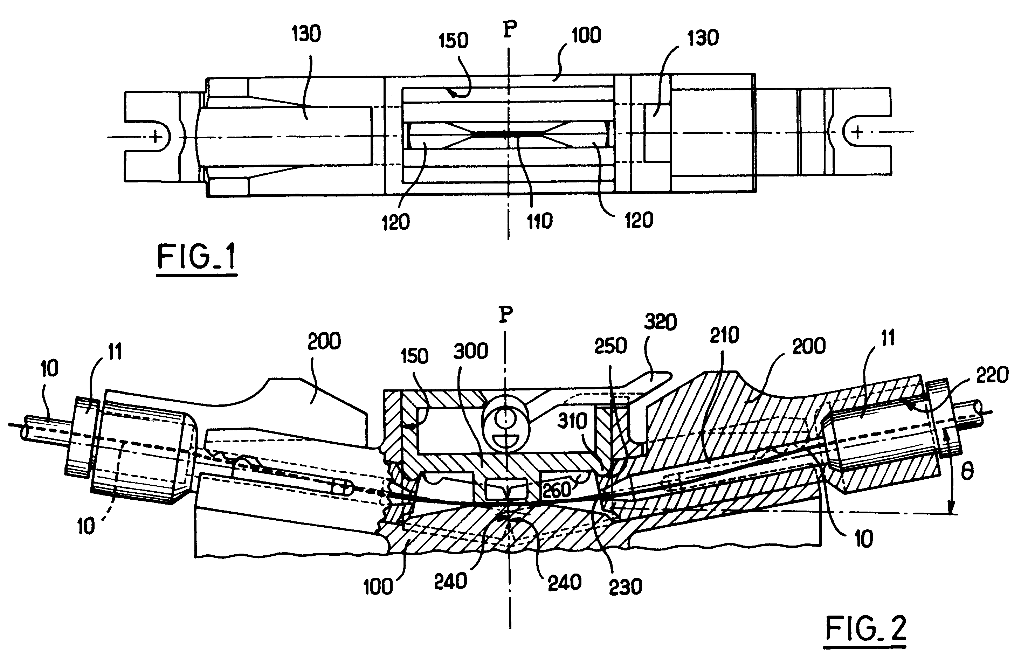

La figure 1 représente l'embase utilisée par le dispositif, embase dans laquelle les fiches mobiles (non représentées) viendront se placer et seront maintenues en position, ainsi que les extrémités de la fibre, par un organe presseur (non plus représenté) manoeuvrable par l'opérateur.

Cette embase 100, de structure sensiblement symétrique de part et d'autre d'un plan médian P, comporte un organe de guidage 110, unique, qui recevra et alignera les deux extrémités de fibre, selon une technique en elle-même classique.

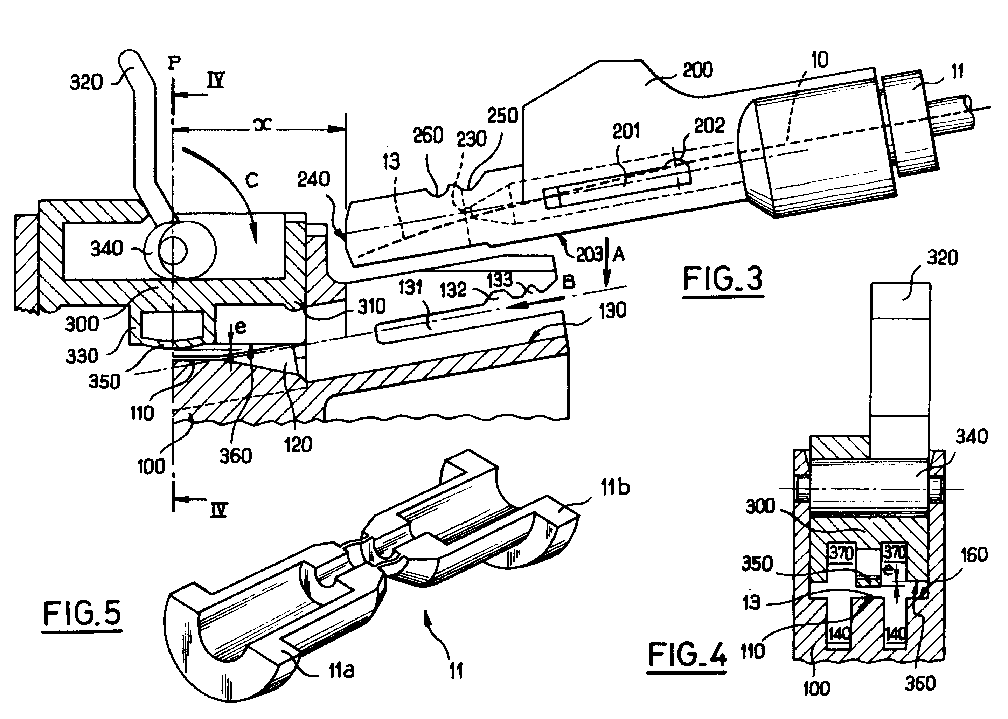

Cet organe de guidage a par exemple la forme d'un V (visible en coupe figure 4) ; ce V a par exemple une profondeur de 100 $\mu$m, pour une fibre de diamètre 125 $\mu$m : de la sorte, les fibres positionnées et mises en butée vont dépasser du V, ce qui permettra de les plaquer dans celui-ci au moyen de l'organe presseur qui sera décrit par la suite, de manière à réaliser une "épissure mécanique", selon la technique illustrée par exemple par les FR-A-2 367 295 et FR-A 2 476 856 précités.

Pour permettre de centrer parfaitement l'une et l'autre fibres à l'intérieur de ce V 110, il est prévu, selon l'une des caractéristiques de l'invention, de prolonger l'organe de guidage par une surface évasée 120 formant organe de préguidage.

Cette surface, visible également figure 3, a par exemple la forme d'un dièdre, symétrique par rapport au plan longitudinal de symétrie du dispositif.

Cette surface évasée 120 va permettre, au moment où la fibre sera introduite dans le dispositif, de la recentrer et de l'orienter correctement pour permettre son positionnement parfait dans l'organe de guidage 110.

L'embase comporte deux glissières 130, ouvertes vers le haut, qui recevront et qui guideront les fiches mobiles vers l'organe de guidage 110.

Comme on peut le voir figure 2, ces glissières sont inclinées d'un angle $\theta$ par rapport au plan d'ensemble de l'embase ; cet angle est de l'ordre de 10°.

Par ailleurs, les glissières sont ouvertes vers le haut dans leur région arrière, comme cela est visible particulièrement figure 3 ; de la sorte, la fiche pourra être introduite dans la glissière par insertion en partie supérieure de celle-ci (flèche A, figure 3), la mise en place finale se faisant par un déplacement axial de faible amplitude (flèche B, figure 3) : de la sorte, la fiche peut être approchée du plan médian P du dispositif à une faible distance x de celui-ci, distance très inférieure à la longueur hors tout du dispositif.

Les glissières comportent enfin une rainure de guidage 131 (figure 3) coopérant avec une saillie homologue 201 de la fiche 200 ; il est prévu sur cette rainure deux encoches 132, 133 permettant un encliquetage en deux positions (déconnexion temporaire 133/connexion 132), ces encoches coopérant avec un relief homologue 202 de la saillie 201 (l'embase est réalisée en une matière plastique moulée assurant l'élasticité nécessaire à l'encliquetage).

On va maintenant décrire la structure de chacune des fiches mobiles 200, en référence notamment aux figures 3 (montrant la fiche en vue latérale, avant son introduction dans le dispositif) et 6 (montrant la fiche en coupe).

Chacune des fiches 200 coopère avec la glissière 130 contre laquelle elle repose par sa face inférieure 203, le guidage au moment de la mise en place étant assuré par la rainure 131 et la saillie 201, comme indiqué plus haut.

La fiche 200 comporte un canal central 210, orienté longitudinalement, terminé à son extrémité arrière par un réceptacle 220 de plus grand diamètre, et à son extrémité avant par un orifice 230 de plus faible diamètre.

Le réceptacle 220 est destiné à recevoir un dispositif de fixation de libre 11 assurant le bridage de la libre optique 10 et sa solidarisation à la fiche. On notera que l'axe $\Delta1$ du réceptacle (c'est-à-dire l'axe de la libre en partie arrière de la fiche) et l'axe $\Delta2$ du canal central 210 sont décalés d'une valeur $\delta$ ; par contre, l'orifice 230 est coaxial à l'axe $\Delta2$ du canal 210.

Cette disposition va imposer à la partie émergente, dénudée 12 de la terminaison de fibre une orientation préférentielle dans un plan contenant les deux axes $\Delta1$, $\Delta2$, après insertion du dispositif de fixation de fibre 11 dans le réceptacle 220 de la fiche. Ce prépositionnement va permettre, lorsque la fiche sera ensuite introduite dans l'embase, de faire en sorte que la partie extrême 13 de la terminaison de libre, c'est-à-dire la partie qui émerge de l'orifice 230, vienne se positionner schématiquement au fond du dièdre 120, assurant ainsi le préguidage optimal de cette partie émergente en direction du V de guidage 110 en partie centrale du dispositif.

Le dispositif de fixation de libre 11 a été représenté figure 5, isolément, et avant mise en place de la partie dénudée de fibre : cette pièce est avantageusement constituée de deux demi-coquilles 11a, 11b, moulées d'une seule pièce dans un matériau d'élasticité suffisante pour faire en sorte que, après insertion de cette pièce 11 dans le réceptacle, la fibre soit parfaitement bridée par serrage de la partie gainée enfoncée à fond dans la pièce formée par les deux demi-coquilles réunies.

Les fiches comprennent également, en face avant, des surfaces frontales de mise en butée et d'appui réciproque (comme illustré figure 2), permettant un positionnement relatif des deux fiches indépendamment de la géométrie de l'embase et des tolérances dimensionnelles de celles-ci.

On notera par ailleurs que cette mise en butée est réalisée dans la zone de connexion optique, optimisant par le fait même le positionnement relatif des deux fiches et donc des deux extrémités de fibre (les surfaces de butée 240 se trouvent en fait à l'extrémité de deux prolongements latéraux des faces latérales, qui viennent chacun s'insérer dans des gorges 140 de l'embase 100 et 370 du presseur 300, ménagés de part et d'autre de l'organe de guidage 110).

De préférence l'organe presseur 300 est conforme à l'organe presseur décrit dans la demande de brevet déposée le 30 mars 1982 sous le numéro 82 05441 au nom de la Société SOCAPEX et publiée sous le numéro 2 524 654.

On va maintenant décrire l'organe presseur et les moyens de verrouillage du dispositif illustrés sur les figures annexées.

Cet organe presseur 300 est inséré dans une cheminée 150 (figures 1 et 2) prolongeant vers le haut la partie centrale du dispositif et guidant l'organe presseur 300 qui y est inséré en translation verticale.

Cet organe presseur 300 a tout d'abord pour fonction de verrouiller en place les fiches dans l'embase.

A cet effet, il est prévu un relief 310 coopérant avec des encoches 250, 260 de chaque fiche.

L'encoche 250 sert au verrouillage de la fiche en position de connexion (position représentée figure 2), c'est-à-dire la position dans laquelle les surfaces frontales de butée 240 des deux fiches sont en contact, la liaison optique entre les deux fibres étant donc établie. Le verrouillage en cette position empêche donc le retrait d'une fiche hors de l'embase tant que le système n'est pas déverrouillé.

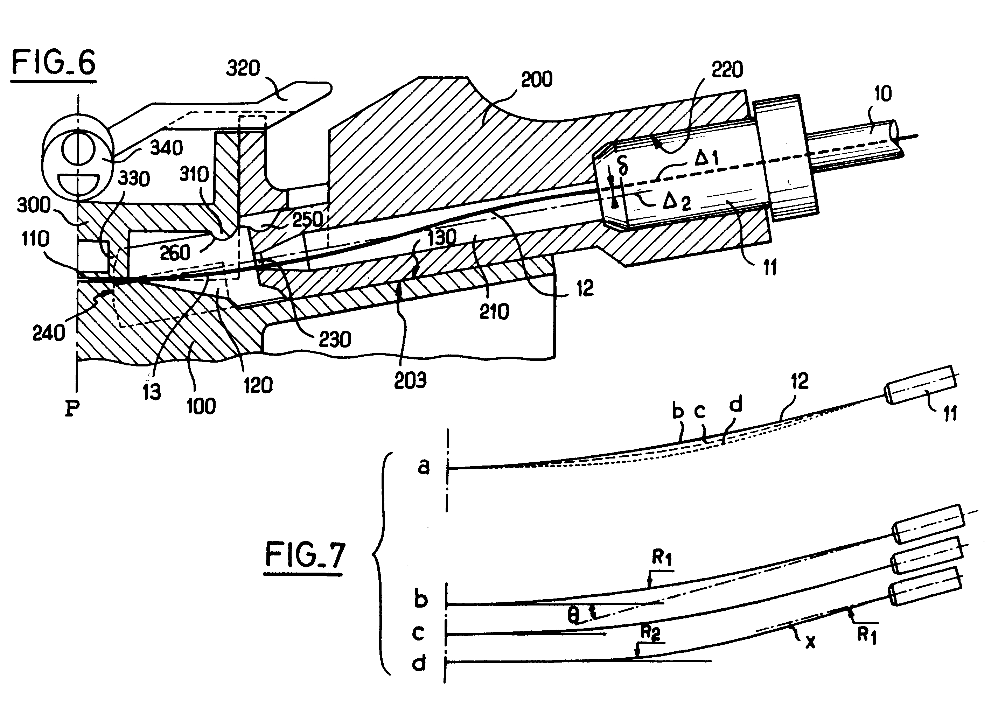

L'encoche 260 permet de verrouiller la fiche dans une position de déconnexion temporaire empêchant le retrait hors de l'embase après un léger déplacement en arrière de la position de connexion (cette position de déconnexion temporaire est par exemple représentée figure 6).

Enfin, le relief 310 empêche également d'introduire une fiche dans l'embase tant que le dispositif n'aura pas été déverrouillé.

Le verrouillage et le déverrouillage du presseur sont réalisés par un moyen de commande 320 en forme de levier, actionnant un excentrique 340 : la figure 3 représente la position déverrouillée (organe presseur relevé), et les figures 2 et 6 représentent la position verrouillée (organe presseur vers le bas immobilisé en position).

L'organe presseur a également pour fonction de plaquer les extrémités de fibre au fond du V de guidage 110 et de les immobiliser en position.

Ceci est réalisé au moyen de la partie 330 (figures 3 et 4) portant un élément élastique déformable 350 situé au droit du V de guidage 110.

L'élasticité de l'élément 350 résulte par exemple du choix de la matière plastique utilisée pour la réalisation de l'organe presseur.

Il est par ailleurs prévu, de part et d'autre du presseur (figure 4) des surfaces 360 qui viendronten butée contre des surfaces homologues 160 de l'embase. Lorsque l'élément élastique 350 n'est pas sollicité, il dépasse d'une valeur e du plan des surfaces de butée 360. Lors de la translation vers le bas de l'organe presseur, les surfaces de butée vont limiter la déformation de cet élément élastique 350 à une valeur assurant une immobilisation des fibres sans contrainte excessive sur ces dernières.

On va maintenant décrire la préparation de la fibre, sa mise en place dans la fiche et la manière dont est réalisée la connexion optique.

On commence tout d'abord par dénuder une fibre, et l'on place l'extrémité de la partie gainée à l'intérieur du dispositif de fixation de fibre 11 illustré figure 5, comme décrit plus haut. Cette opération de dénudage peut être réalisée après la mise en place de la fibre dans la pièce 11.

Ce dispositif 11 est ensuite placé dans le réceptacle en partie arrière d'une fiche, de manière à assurer, par pression élastique, le bridage de la fibre et sa solidarisation à la fiche.

On fracture ensuite la partie dénudée libre à une longueur prédéterminée par rapport à l'extrémité de la fiche.

Deux fiches ayant été préparées de la sorte, on les place dans une embase commune : la simple mise en place de la fiche va assurer, grâce aux dièdres de préguidage 120, un positionnement de l'extrémité libre de la fibre dans le V de guidage 110.

Le rapprochement des deux fiches et leur mise en butée va provoquer une venue en contact des deux faces frontales des terminaisons de fibre qui, par réaction, vont être comprimées l'une contre l'autre, ce qui permettra d'assurer une parfaite liaison optique.

Du fait des variations de tolérance pouvant exister entre les longueurs des parties libres des terminaisons de fibre, le plan de joint P' n'est pas forcément confondu avec le plan médian P du dispositif. L'un des avantages du système de l'invention est précisément de permettre un décalage et une compensation des tolérances grâce à une flexion plus ou moins grande de la partie 12 de la terminaison de fibre située à l'intérieur du canal 210 de la fiche.

La figure 7 illustre schématiquement les déformations qui peuvent ainsi être subies par la fibre dans sa partie libre 12 émergeant du dispositif de fixation de fibre 11 et reposant par son extrémité sur le V de guidage 110.

La figure 7a illustre les deux positions extrêmes (en l'absence de sollicitation et avec une sollicitation correspondant aux tolérances maximales), ainsi qu'une position médiane ; ces positions sont reprises respectivement figures 7b, 7c et 7d.

En l'absence de toute réaction sur l'extrémité de fibre (absence de sollicitation axiale), la fibre est soumise à une flexion unique de faible courbure, par exemple R1 = 100 mm.

Pour une réaction importante (sollicitation axiale maximale), la fibre peut prendre une double courbure, par exemple R2 = 50 mm (le rayon de courbure restant toujours supérieur à la valeur maximale que peut supporter la fibre) et R1 = 100 mm, avec un point d'inflexion X.

On notera que les différentes cotes de la fiche et de l'embase sont divisées de sorte que, pour toute position de la fibre représentée figure 7, la partie libre de la terminaison de fibre ne soit jamais en contact avec les parois de l'orifice 230, pour éviter toute réaction à cet endroit.

On peut enfin remarquer les avantages subsidiaires suivants procurés par l'invention :

- du fait de leurs formes, les différentes pièces constituant le dispositif de l'invention ne présentent aucune impossibilité de moulage, ce qui permet de les réaliser en un matériau moulable par injection selon une technique classique permettant d'obtenir une excellente précision dimensionnelle.
- le presseur est entièrement démontable ; il suffit pour cela de retirer l'axe de l'excentrique : cette disposition permet un accès très facile à toutes les régions du dispositif, notamment l'organe de guidage, lorsque l'on souhaite par exemple procéder à un nettoyage ou à un contrôle.

- une pluralité de dispositifs de connexion peuvent être juxtaposés, la fixation se faisant par exemple par vissage ou par encliquetage sur une barre cylindrique commune. Cette caractérisque, combinée à la possibilité de mettre en place les fiches par le haut, permet de grouper un grand nombre de dispositifs de connexion dans un emplacement très-réduit.
- ce dispositif pourra être généralement utilisé pour des fibres multimode de diamètre 125 μm ou toute autre valeur ; il est également possible d'utiliser des fibres monomode à bonne concentricité, dès lors qu'elles permettent un alignement correct par simple centrage sur le diamètre extérieur de la fibre (en contact avec les parois du V de guidage).
- le très faible jeu subsistant entre les différentes pièces assure une bonne étanchéité à la poussière sans qu'il soit nécessaire de prévoir de moyens d'étanchéité spécifique.

**Revendications**

1.  Un dispositif de connexion réversible entre deux fibres optiques (10) fixées chacune dans un dispositif de fixation de fibre respectif (11) laissant dépasser une partie terminale de fibre (12), dénudée, du type comprenant :

    . une embase (100) pourvue d'un organe de guidage (110) qui reçoit et aligne le long d'une direction de guidage les deux parties terminales de fibre,

    . deux fiches mobiles (200) de forme longitudinale, emboîtables chacune dans l'embase de part et d'autre de l'organe de guidage, de sorte que les axes longitudinaux (Δ2) des fiches forment un angle d'inclinaison (θ) par rapport à la direction de guidage de l'organe de guidage, chaque fiche comportant un canal central (210) terminé à son extrémité arrière par un réceptacle (220) contenant le dispositif de fixation correspondant, muni de sa fibre et à son extrémité avant par un orifice (230) de dimensions légèrement supérieures au diamètre de la partie terminale de fibre, la longueur du canal laissant subsister, au-delà de l'orifice, une partie émergente (13) de la partie terminale de fibre après mise en place du dispositif de fixation de fibre dans le réceptacle, et sa largeur étant suffisante pour autoriser une flexion limitée de la partie terminale de fibre en fonction des sollicitations exercées sur la partie émergente,

    caractérisé en ce qu'il comprend également un organe presseur (300), placé en regard de l'organe de guidage, pour immobiliser avec serrage les parties terminales de fibre contre celui-ci, et en ce que chaque fiche comporte une surface frontale (240) de mise en butée et d'appui réciproque des deux fiches, de sorte que l'enfoncement des fiches dans l'embase et leur mise en butée permettent la venue en contact des faces d'extrémité des deux fibres dans l'organe de guidage, et la flexion de la fibre dans le canal de la fiche assurant, par réaction, un contact de pression tout en autorisant, le cas échéant, un décalage, par rapport au plan médian du dispositif, du plan de joint défini par les faces en contact des fiches.

2. Un dispositif selon la revendication 1, dans lequel l'axe du réceptacle (Δ1) est décalé par rapport à l'axe du canal (Δ2), de manière à prépositionner la partie émergente de la partie terminale de fibre, selon une orientation préférentielle dans un plan contenant les deux axes après insertion du dispositif de fixation de fibre dans la fiche.

3. Un dispositif selon la revendication 1, dans lequel l'organe de guidage est prolongé, de part et d'autre, par une surface évasée (120) formant organe de préguidage.

4. Un dispositif selon la revendication 1, dans lequel il est prévu des moyens (310, 250) de verrouillage en position de connexion empêchant le retrait des fiches hors de l'embase ou leur introduction dans celle-ci.

5. Un dispositif selon la revendication 4, dans lequel les moyens de verrouillage et l'organe presseur sont actionnés par un moyen de commande (320) unique.

6. Un dispositif selon la revendication 4, dans lequel il est prévu, outre la position de connexion des fiches, (310, 250), une position de déconnexion temporaire (310, 260) empêchant le retrait des fiches hors de l'embase après un léger retrait de celles-ci en arrière de leur position de connexion.

7. Un dispositif selon la revendication 1, dans lequel l'embase comporte deux glissières (130) symétriques recevant et guidant les fiches en direction de l'organe de guidage.

8. Un dispositif selon la revendication 7, dans lequel les glissières sont inclinées, en direction de l'organe de guidage, par rapport au plan d'ensemble de l'embase.

9. Un dispositif selon la revendication 7 ou 8, dans lequel les glissières sont ouvertes dans leur région arrière, de manière à permettre l'introduction de la fiche dans la glissière par insertion dans l'ouverture.

10. Un dispositif selon la revendication 1, dans lequel l'organe presseur (300) comporte un élément (330) déplaçable en translation au moyen d'un excentrique (340).

11. Un dispositif selon la revendication 1, dans lequel l'organe presseur comporte un élément élastique déformable (350), en regard de l'organe de guidage.

12. Un dispositif selon la revendication 11, dans lequel l'organe presseur comporte des surfaces de butée (360) venant en contact avec l'embase de manière à limiter la course de l'organe presseur et la déformation de l'élément élastique à une valeur assurant une immobilisation des fibres sans contrainte excessive sur ces dernières.

13. Une fiche, pour un dispositif de connexion selon l'une des revendications précédentes, comportant :
   - un canal central (210) terminé à son extrémité arrière par un réceptacle (220) contenant le dispositif de fixation correspondant, muni de sa fibre et à son extrémité avant par un orifice (230) de dimensions légèrement supérieures au diamètre de la partie terminale de fibre, caractérisée en ce qu'elle a une surface frontale (240) de mise en butée et d'appui réciproque des deux fiches, définie par les extrémites de deux prolongements latéraux destinés à être insérés dans des glissières correspondantes de l'embase.

14. Une embase, pour un dispositif de connexion selon l'une quelconque des revendications 1 à 12 et comportant une fiche selon la revendication 13, pourvue d'un organe de guidage (110) recevant en alignement les deux parties terminales de fibre, caractérisée en ce qu'elle présente des glissières (140) dans lesquelles sont insérés les prolongements latéraux de ladite fiche.

15. Une embase selon la revendication 14, caractérisée en ce que, les glissières (120) sont inclinées, en direction de l'organe de guidage, par rapport au plan d'ensemble de l'embase, et sont ouvertes dans leur région arrière, de manière à permettre l'introduction de la fiche dans la glissière par insertion en partie supérieure de celle-ci.

## Claims

1. A non-permanent connecting device between two optical fibers (10) each of which is fixed into a respective fiber holding device (11) from which protrudes a bared end (12) of the fiber, said connecting device comprising a socket member (100), a guide member (110) on said socket member which accomodate and align along a guiding direction the bared fiber ends, two mobile plug members (200) each adapted to interlock nesting fashion with said socket member one on each side of said guide member so that their axes ($\Delta$2) are at a predetermined tilt angle ($\theta$) relative to said guiding direction, wherein each plug member comprises a central channel (210), a receptacle (220) at a rear end of said channel for said fiber holding device, and an orifice at a front end of said channel slightly larger than the diameter of said bared fiber end, and the length of said central channel is sufficient to allow part of said bared fiber end to form protusion (13) through said orifice after said fiber holding device is fitted into said receptacle and the width of said central channel is sufficient to allow limited flexing of said bared fiber end in response to loads applied to said protruding part thereof, characterized in that said device further comprises a clamp member (300) facing said guide member adapted to immobilize said bared fiber ends by clamping said fiber ends against said guide member, and in that each plug member comprises a front surface (240) through which one plug member is adapted to come into an abutting and supporting relationship to the other plug member, so that plugging said plug members into said socket member and abutting thereof bring the end surfaces of the two fibers into contact inside said guide member, flexing of the fiber in said central channel producing reaction forces to pressurize this contact and allowing displacement of the mating plane defined by the contacting end surfaces of the plug members relative to the median plane of the device.

2. Device according to claim 1, wherein the axis of said receptacle ($\Delta$1) is offset relative to an axis ($\Delta$2) of said central channel so as to position said protruding part (13) of said bared fiber end in accordance with a preferential direction in a plane containing said two axes after insertion of said fiber holding device into said plug member.

3. Device according to claim 1, wherein said guide member has at each end a flared surface (120) constituting a preliminary guide member.

4. Device according to claim 1, further comprising locking means (310,250) operative in a connected position to prevent either removal of said plug members from said socket member or their insertion into said socket member.

5. Device according to claim 4, comprising control means (320) adapted to actuate said locking means and said clamp member.

6. Device according to claim 4, wherein said locking means (310,250) for connecting said plug members also define a temporary disconnection position (310,260) to prevent withdrawal of said plug members from said socket member following limited movement of said plug members to the rear of their connected position.

7. Device according to claim 1, wherein said socket member comprises a general plane and two symmetrical slides (130) adapted to receive said plug members and guide them towards said guide member.

8. Device according to claim 7, wherein, relative to the general plane of said socket member, said slides are inclined towards said guide member.

9. Device according to claim 7 or 8, wherein a rear part of said slides is open to allow said plug member to be inserted into said slide through the opening.

10. Device according to claim 1, wherein said clamp member (300) comprises a member movable (330) in translation and a cam for moving said member (340).

11. Device according to claim 1, wherein said clamp member comprises a deformable elastic member (350) facing said guide member.

12. Device according to claim 11, wherein said clamp member comprises abutment surfaces (360) adapted to contact said socket member to limit the travel of said clamp member and the deformation of said elastic member in order to immobilize the fibers without unduly stressing them.

13. Plug member for use in a device according to one of the preceding claims, comprising a central channel (210), a receptacle (220) at a rear end of said channel for said fiber holding device, and an orifice at a front end of said channel slightly larger than the diameter of said bared fiber end, characterized in that said plug member has a front surface (240) through which it is adapted to come into an abutting and supporting relationship to the other plug member defined by the ends of two lateral protrusions to be placed in corresponding slides of the socket.

14. Socket for use in a device according to one of claims 1 through 12 and comprising a plug member according to claim 13, provided with a guide member (110) which accomodate in alignment the two fiber ends ; characterized in that said socket has slides (140) wherein lateral protrusions of said plug member are placed.

15. Socket according to claim 14, characterized in that said slides (120) are tilted toward guide number, relative to the socket plane, and are open at rear part, so as to enable introducing of plug number in the slide by insertion at the top part thereof.

**Patentansprüche**

1. Reversible Verbindungsvorrichtung zwischen zwei Lichtleitern (10), von denen jeder in einer Befestigungsvorrichtung (11) gehalten ist, welche eine entblößte Endpartie (12) des betreffenden Lichtleiters durchläßt, umfassend:
   - einen Sitz (100) für ein Führungsorgan (110), welches die beiden Endpartien der Lichtleiter längs einer Führungsrichtung aufnimmt und ausrichtet,
   - zwei bewegliche Halter (2) von länglicher Gestalt, die jeweils einerseits in den Sitz und andererseits in das Führungsorgan einführbar sind, derart, daß die Längsachsen (Δ2) der Halter einen Neigungswinkel ($\theta$) bezüglich der Führungsrichtung des Führungsorganes bilden, wobei jeder Halter einen an seinem hinteren Ende durch eine Kammer (220) begrenzten zentralen Kanal (210) aufweist, welcher die entsprechende Befestigungsvorerichtung enthält, in der der entsprechende Lichtleiter aufgenommen ist, und an seinem vorderen Ende eine Öffnung (230) von etwas größeren Abmessungen als der Durchmesser der Lichtleiter-Endpartie aufweist, wobei die Kanallänge außerhalb der Öffnung eine Austrittspartie (13) der Lichtleiter-Endpartie nach Montage der Befestigungsvorrichtung für den Lichtleiter in der Kammer bestehen läßt und die Kanalweite ausreichend ist, um eine begrenzte Biegung der Lichtleiter-Endpartie aufgrund von Beanspruchungen zuzulassen, die auf die Austrittspartie ausgeübt werden,

dadurch **gekennzeichnet,** daß

außerdem ein Pressorgan (300) vorgesehen ist, das mit Bezug auf das Führungsorgan plaziert ist, um die Lichtleiter-Endpartien gegen dieses unter Klemmung unbeweglich zu machen, und daß jeder Kalter eine Frontfläche (240) zur gegenseitigen Anlage der beiden Halter aufweist, derart, daß das Eintauchen der Halter in den Sitz und deren Aplageposition ein Inkontaktkommen der äußersten Enden der beiden Lichtleiter im Führungsorgan erlaubt und die Durchbiegung des Lichtleiters in dem Kanal des Halters aufgrund der Reaktion einen Druckkontakt schafft, der gegebenenfalls eine Verlagerung der durch die Kontaktflächen der Halter definierten Ebenen bezüglich der Medianebene der Vorrichtung zuläßt.

2. Vorrichtung nach Anspruch 1, bei der die Achse (Δ1) der Kammer bezüglich der Achse (Δ2) des Kanals versetzt ist, derart, daß die Austrittspartie der Lichtleiter-Endpartie mit einer Vorzugsorientierung in einer die beiden Achsen enthaltenden Ebene nach dem Einsetzen der Befestigungsvorrichtung des Lichtleiters in den Halter vorpositioniert ist.

3. Vorrichtung nach Anspruch 1, bei der das jeweilige Führungsorgan durch eine erweiterte Fläche (120) verlängert ist, wodurch ein Vorführungsorgan gebildet ist.

4. Vorrichtung nach Anspruch 1, bei der Verriegelungsmittel (310, 250) zum Verriegeln in Verbindungsposition vorgesehen sind, die das Zurückziehen der Halter aus dem Sitz oder deren Einführen in denselben verhindern.

5. Vorrichtung nach Anspruch 4, bei dem die Verriegelungsmittel und das Pressorgan durch eine gemeinsame Stellvorrichtung (320) betätigt sind.

6. Vorrichtung nach Anspruch 4, bei der außer der Verbindungsposition der Halter (310, 250) eine temporäre Löseposition (310, 260) vorgesehen ist, welche das Zurückziehen der Halter aus dem Sitz nach einem geringfügigen Zurückziehen derselben nach hinten aus ihrer Verbindungsposition heraus behindert.

7. Vorrichtung nach Anspruch 1, bei welcher der Sitz zwei symmetrische Gleitbahnen (130) aufweist, welche die Halter in Richtung des Führungsorgans aufnehmen und führen.

8. Vorrichtung nach Anspruch 7, bei welcher die Gleitbahnen in Richtung des Führungsorganes bezüglich der Ebene der gemeinsamen Sitzanordnung geneigt sind.

9. Vorrichtung nach Anspruch 7 oder 8, bei welcher die Gleitbahnen in ihrem hinteren Bereich offen sind, derart, daß sie eine Einführung des Halters in die Gleitbahn durch Einsetzen in die Öffnung ermöglichen.

10. Vorrichtung nach Anspruch 1, bei welcher das Pressorgan (300) ein mittels eines Exzenters (340) translatorisch verlagerbares Element (330) aufweist.

11. Vorrichtung nach Anspruch 1, bei welcher das Pressorgan ein bezüglich des Führungsorganes elastisch verformbares Element (350)- aufweist.

12. Vorrichtung nach Anspruch 11, bei welcher das Pressorgan Anschlagoberflächen (360) hat, welche mit dem Sitz in Kontakt kommen, dergestalt, daß der Hub des Pressorganes und die Deformation des elastischen Elementes auf Werte begrenzt werden, die ein Festlegen der Lichtleiter ohne übermäßige Zwängung derselben ermöglichen.

13. Halter für eine Verbindungsvorrichtung nach einem der vorangehenden Ansprüche mit
　- einem zentralen Kanal (210), der an seinem hinteren Ende von einer die entsprechende Befestigungsvorrichtung enthaltenden Kammer (220) begrenzt ist, worin der zugehörige Lichtleiter untergebracht ist, wobei der Kanal an seinem vorderen Ende durch eine Öffnung (230) von etwas größeren Abmessungen als der Durchmesser der Lichtleiter-Endpartie begrenzt ist, dadurch **gekennzeichnet,** daß sie eine Stirnfläche (240) für die gegenseitige Anlage und Abstützung der beiden Halter mittels der äußersten Enden der beiden seitlichen Verlängerungen aufweist, die dazu bestimmt sind, in die entsprechenden Gleitbahnen des Sitzes eingesetzt zu werden.

14. Sitz für eine Verbindungsvorrichtung nach einem der Ansprüche 1 bis 12, der einen Halter nach Anspruch 13 aufweist, welcher mit einem Führungsorgan (110) zur fluchtenden Aufnahme der beiden Lichtleiter-Endpartien versehen ist, dadurch **gekennzeichnet,** daß er Gleitbahnen (140) aufweist, in welche die seitlichen Verlängerungen des genannten Halters eingesetzt sind.

15. Sitz nach Anspruch 14, dadurch **gekennzeichnet**, daß die Gleitbahnen (120) in Richtung des Führungsorganes bezüglich der Ebene der Sitzanordnung geneigt und in ihrem hinteren Bereich offen sind, derart, daß sie ein Einführen des Halters in die Gleitbahn durch Einsetzen in einen oberen Bereich derselben zuläßt.

FIG.1

FIG.2

FIG. 3

FIG. 5

FIG. 4

EP 0 215 696 B1

FIG.6

FIG.7

EP 0 215 696 B1